(19) Europäisches Patentamt
European Patent Office
Office européen des brevets

(11) **EP 2 063 554 A2**

(12) **EUROPEAN PATENT APPLICATION**

(43) Date of publication:
**27.05.2009 Bulletin 2009/22**

(51) Int Cl.:
*H04B 7/26* (2006.01)     *H04L 7/04* (2006.01)
*H04J 3/06* (2006.01)

(21) Application number: **08019962.3**

(22) Date of filing: **14.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.11.2007 US 990218 P**
**06.10.2008 US 246151**
**09.09.2008 US 95454 P**

(71) Applicant: **Broadcom Corporation**
**Irvine CA 92617 (US)**

(72) Inventors:
• **Kent, Mark**
  **Vista, 92081 (US)**
• **Swarts, Francis**
  **San Diego, CA 92130 (US)**

(74) Representative: **Jehle, Volker Armin**
**Bosch Jehle Patentanwaltsgesellschaft mbH**
**Flüggenstrasse 13**
**80639 München (DE)**

(54) **Method and system for ordering sequences for synchronization signaling in a wireless system**

(57)     Certain embodiments of the invention may be found in a method and system for ordering sequences for synchronization signaling in a wireless system. Various aspects of the invention may enable a user equipment (UE) receiving signals from eUTRAN base stations (NodeBs). The received signals may comprise synchronization sequences transmitted using synchronization signals such as a primary synchronization signal (PSS) and a secondary synchronization signal (SSS). The UE may be enabled to determine the received PSS sequence and SSS sequence for downlink synchronization by correlating the received signal with a set of PSS sequences and a set of SSS sequences, respectively. An SSS sequence may be constructed from two length m-sequences from an ordered set of m-sequences. The ordered set of m-sequences may form a Walsh-Hadamard matrix, which enables the UE to use a fast Walsh-Hadamard matrix transform in SSS sequence processing.

FIG. 1

**Description**

CROSS-REFERENCE TO RELATED APPLICATIONS/INCORPORATION BY REFERENCE

This patent application makes reference to, claims priority to and claims benefit from United States Provisional Patent Application Serial No. 60/990,218 filed on November 26, 2007.
This patent application also makes reference to, claims priority to and claims benefit from United States Provisional Patent Application Serial No 61/095,454 filed on September 09, 2008.
Each of the above state applications is hereby incorporated herein by reference in its entirety.

FIELD OF THE INVENTION

Certain embodiments of the invention relate to wireless communication systems. More specifically, certain embodiments of the invention relate to a method and system for ordering sequences for synchronization signaling in a wireless system.

BACKGROUND OF THE INVENTION

Mobile communications have changed the way people communicate and mobile device users have come to depend on high quality cellular service to conduct business and stay in contact. Before negotiating service with a serving base station, a mobile device needs to acquire certain cell-specific information transmitted from base stations, for example, for time and/or frequency synchronization.
In 3GPP EUTRA or Long Term Evolution (LTE), the cell-specific information is carried by the reference and/or synchronization signals. The latter forms the basis for downlink synchronization and cell ID information identification at the mobile device. Two downlink (DL) synchronization signals, namely Primary Synchronization Signal (PSS) and Secondary Synchronization Signal (SSS), are defined and these are used to carry timing information to the mobile device so that the mobile device may obtain the correct timing for the DL frames. These signals are also used to convey base station identity information.
Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A system and/or method is provided for ordering sequences for synchronization signaling in a wireless system, substantially as shown in and/or described in connection with at least one of the figures, as set forth more completely in the claims.
According to an aspect, a method for processing signals comprises:

receiving, at a user equipment (UE), a signal comprising a synchronization sequence from a base station; and

determining said synchronization sequence based on an ordered set of maximal length sequences (m-sequences) at said UE.

Advantageously, said synchronization sequence is constructed from one or more maximal length sequence (m-sequence).
Advantageously, said base station is a eUTRAN base station.
Advantageously, the method further comprises calculating correlations between said received signal and said ordered set of maximal length sequences.
Advantageously, the method further comprises determining said synchronization sequence based on said calculated correlations.
Advantageously, said ordered set of maximal length sequences is transformed from a single maximal length sequence (m-sequence) in a determined order.
Advantageously, the method further comprises generating a first m-sequence of said ordered set of maximal length sequences from an initial setting of $[SR_1, SR_2,...,SR_n]=[1,0,...,0]$ of an n-stage m-sequence generator, where $2^n-1$ equals to the length of said received synchronization sequence, where n is an non-zero integer.
Advantageously, the method further comprises generating a subsequent m-sequence of said ordered set of maximal length sequences by successive left cyclic shift of said generated first m-sequence.

Advantageously, the method further comprises generating a Walsh-Hadamard matrix based on said ordered set of maximal length sequences.

Advantageously, the method further comprises determining said synchronization sequence based on said Walsh-Hadamard matrix.

Advantageously, said ordered set of maximal length sequences forms a Walsh-Hadamard matrix.

According to an aspect, a system for signal processing comprises:

one or more circuits operable to receive, at a user equipment (UE), a signal comprising a synchronization sequence from a base station; and

said one or more circuits operable to determine said synchronization sequence based on an ordered set of maximal length sequences (m-sequences) at said UE.

Advantageously, said synchronization sequence is constructed from one or more maximal length sequence.

Advantageously, said base station is a eUTRAN base station.

Advantageously, said one or more circuits are operable to calculate correlations between said received signal and said ordered set of maximal length sequences.

Advantageously, said one or more circuits are operable to determine said synchronization sequence based on said calculated correlations.

Advantageously, said ordered set of maximal length sequences is transformed from a single maximal length sequence (m-sequence) in a determined order.

Advantageously, said one or more circuits are operable to generate a first m-sequence of said ordered set of maximal length sequences from an initial setting of $[SR_1, SR_2,...,SR_n] = [1,0,...,0]$ of an n-stage m-sequence generator, where $2^n - 1$ equals to the length of said received synchronization sequence, where n is non-zero integer.

Advantageously, said one or more circuits are operable to generate a subsequent m-sequence of said ordered set of maximal length sequences by successive left cyclic shift of said generated first m-sequence.

Advantageously, said one or more circuits are operable to generate a Walsh-Hadamard matrix based on said ordered set of maximal length sequences.

Advantageously, said one or more circuits are operable to determine said synchronization sequence based on said Walsh-Hadamard matrix.

Advantageously, said ordered set of maximal length sequences forms a Walsh-Hadamard matrix.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG.1 is a diagram illustrating an exemplary EUTRA (LTE) communication system that may utilize ordered sequences for synchronization signaling, in accordance with an embodiment of the invention.

FIG. 2 is a block diagram of an exemplary EUTRA (LTE) downlink synchronization signal structure, in accordance with an embodiment of the invention.

FIG. 3 is a diagram illustrating an m-sequence generator that may be utilized for generating ordered m-sequences for synchronization signaling, in accordance with an embodiment of the invention.

FIG. 4 is a flow chart illustrating exemplary steps for generating m-sequences, in accordance with an embodiment of the invention.

DETAILED DESCRIPTION OF THE INVENTION

Certain embodiments of the invention may be found in a method and system for ordering sequences for synchronization signaling in a wireless system. In accordance with various aspects of the invention, a user equipment (UE) may be operable to receive signals from one or more eUTRAN base stations (NodeBs). The received signals may comprise binary synchronization sequences transmitted utilizing synchronization signals such as a secondary synchronization signal (SSS). The UE may be enabled to determine the received primary synchronization and secondary synchronization signals for downlink synchronization by correlating the received signal with possible candidates for PSS sequence and SSS sequences, respectively. An SSS sequence may be constructed by concatenating and interleaving two m-sequences from an ordered set of m-sequences. The UE may take an m-sequence transform approach to determine which sequence from the ordered set of m-sequences may be received. The first m-sequence of the ordered set may be obtained by setting initial contents of shift register $[SR_1, SR_2,...,SR_n]$ of corresponding m-sequence generator as follows:

$$[SR_1, SR_2, ..., SR_n] = [1, 0, ..., 0],$$

where $n$ is the order of the m-sequence generator. The subsequent m-sequences in the ordered set of m-sequences may be generated by successive left cyclic shift of the generated first m-sequence. The ordered set of m-sequences may form a $2^n \times 2^n$ Walsh-Hadamard matrix. The UE may use a fast Walsh-Hadamard matrix transform in the secondary synchronization signal (SSS) detection.

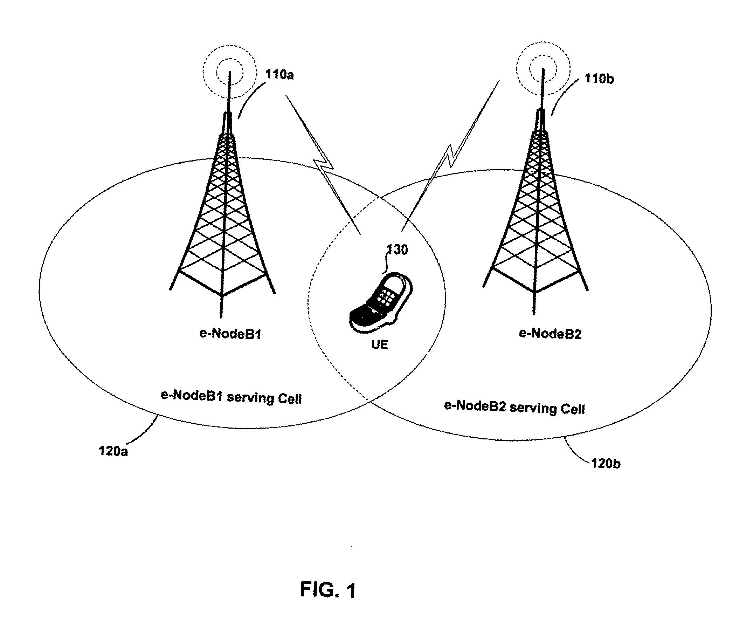

FIG. 1 is a diagram illustrating an exemplary EUTRA (LTE) communication system that may utilize ordered sequences for synchronization signaling, in accordance with an embodiment of the invention. Referring to FIG. 1, there is shown a eUTRAN base station (e-NodeB1) 110a, a eUTRAN base station (e-NodeB2) 110b, an e-NodeB1 serving cell 120a, an e-NodeB2 serving cell 120b, and a user equipment (UE) 130.

A eUTRAN base station such as the e-NodeB1 110a and/or the e-NodeB2 110b may comprise suitable logic, circuitry and/or code that may enable establishment, maintenance and termination of connections over the EUTRA (LTE) air interface. The e-NodeB1 110a and/or the e-NodeB2 110b may be operable to manage radio resources such as, for example, radio bearer control, radio admission control, connection mobility control, and dynamic allocation of resources for the UE 130 in both uplink and downlink (scheduling). In this regard, the eUTRAN base station such as the e-NodeB1 110a may be configured to transmit synchronization sequences to the UE 130 using the downlink synchronization signals such as the primary synchronization signal (PSS) and the secondary synchronization signal (SSS) in one or more radio frames. The UE 130 may acquire time and frequency synchronization with the e-NodeB1 serving cell 120a and may determine the Cell ID of the e-NodeB1 serving cell 120a based on the received PSS and SSS. The e-NodeB1 110a may be enabled to assign and control a plurality of communications parameters such as, for example, physical layer cell ID group and physical layer ID, which may be utilized by the UEs to acquire, for example, slot and frame timing of the downlink transmission.

The UE 130 may comprise suitable logic, circuitry and/or code that may be enabled to communicate with an eUTRAN base station such as the e-NodeB1 110a. The UE 130 may be enabled to establish, maintain, and/or terminate communications with the e-NodeB1 110a by performing various procedures such as link set-up and cell search. For example, in instances when the UE 130 may be switched on and/or during active or idle modes, the UE 130 may perform cell search to acquire slot and frame timing, as well as frequency synchronization with a base station. The UE 130 may also be enabled to detect the cell ID of the cell, and obtain system parameters such as cyclic prefix (CP) length and system bandwidth. The UE 130 may be enabled to establish synchronization with the transmitter based on the correlation of the received signal with a set of PSS time-domain sequences and SSS sequences.

A SSS sequence may be constructed by concatenating and interleaving two m-sequences. In this regard, the two m-sequences may be from an ordered set of m-sequences, which may be obtained by initializing the m-sequence generator with a specific initialization sequence. The usage of the ordered set of m-sequences may enable the UE 130 to reduce the computational complexity in SSS detection via using an m-sequence transform technique based on, for example, the fast Walsh-Hadamard transform.

In operation, the UE 130 may receive signals from eUTRAN base stations such as the e-NodeB1 110a and/or the e-NodeB2, respectively. The UE 130 may perform cell search to achieve time and frequency synchronization of the UE 130 with a base station such as the e-NodeB1 serving cell 120a or the e-NodeB2 serving cell 120b. During the cell search, the UE 130 may acquire slot synchronization to the cell via a plurality of filters matched to the set of PSS sequences that could be contained in the received signal. The UE 130 may identify the SSS sequence transmitted from the e-NodeB1 110a and/or the e-NodeB2 by correlating the received signal with possible SSS sequences formed from an ordered set of m-sequences. The UE 130 may achieve frame synchronization and determine the cell ID information based on the identified PSS and SSS sequences. The UE 130 may camp on the determined cell for communication with the corresponding serving base station, either the e-NodeB1 110a or the e-NodeB2, accordingly.

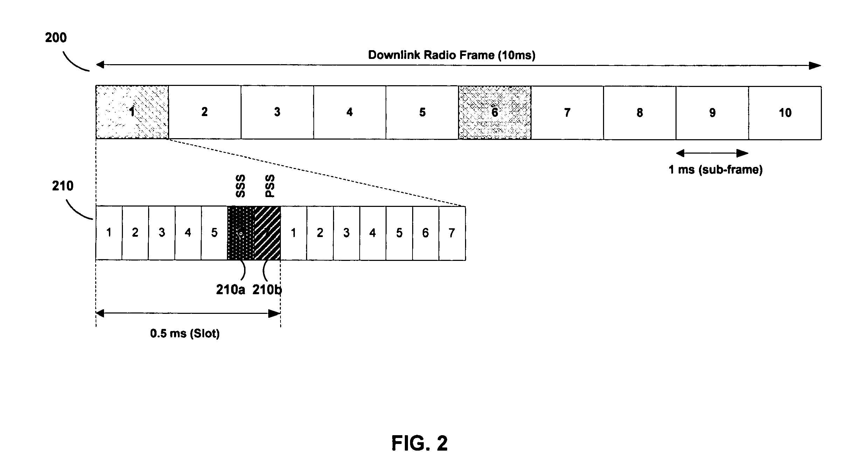

FIG. 2 is a block diagram of an exemplary EUTRA (LTE) downlink frame structure, in accordance with an embodiment of the invention. Referring to FIG. 2, there is shown a downlink radio frame 200. In EUTRA (LTE), the downlink radio frame 200 may be divided into twenty equally sized slots with two contiguous slots arranged into a sub-frame such as the sub-frame 210. Each sub-frame such as the sub-frame 210 may comprise two equally sized slots. The downlink synchronization signals such as PSS 210a and SSS 210b may be transmitted from an eUTRAN base station such as, for example, the e-NodeB1 110a and/or the e-NodeB2 110b, to the UE 130 so that the UE 130 may obtain correct timing for the downlink radio frame 200 and acquire the correct cell ID. The PSS 210a and SSS 210b may be transmitted on sub-frame 0 and 5 of the downlink radio frame 200 and occupy two consecutive OFDM symbols in a corresponding sub-frame. The PSS may be used to identify the symbol timing and the physical cell ID within a cell ID group while the SSS may be used for identifying frame boundary, detecting cell ID group, system parameters such as CP length. The UE 130 may correlate the received signal with possible SSS sequences in order to detect the transmitted SSS sequence from the eUTRAN base station such as, for example, the e-NodeB1 110a and/or the e-NodeB2 110b.

In this regard, the possible SSS sequences may be constructed by m-sequences from an ordered set of m-sequences to achieve a lower computational complexity in SSS processing.

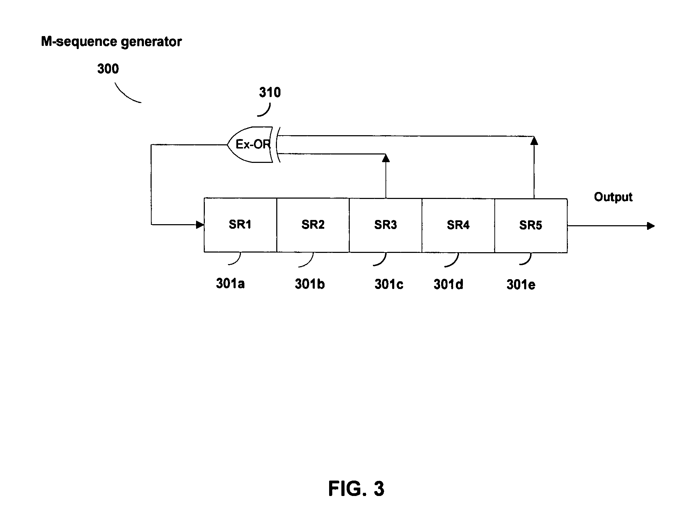

FIG. 3 is a diagram illustrating an exemplary m-sequence generator that may be utilized for generating ordered m-sequences for synchronization signaling, in accordance with an embodiment of the invention. Referring to FIG. 3, there is shown an m-sequence generator 300 comprising an Ex-OR 310 and a plurality of shift register stages or cells (SR), of which SR1 301 a, SR2 301 b, SR3 301 c, SR4 301 d, and SR5 301 e are illustrated.

The m-sequence generator 300 may comprise suitable logic, circuitry and/or code that may enable generating binary sequences such as the maximum length sequences or m-sequences. In general, a set of $2^n$-1 m-sequences of length $2n$-1 may be generated by a generator polynomial of $g(X)=a_nX^n+a_{n-1}X^{n-1}+...+a_1X+1$, where $n$ is the order of the generator polynomial, and $a_n,a_{n-1},...,a_1 \in [0,1]$ are coefficients of the generator polynomial. The $2^n$-1 m-sequences of length $2^n$-1 may be generated by cyclically shifting any one m-sequence within the set by 1,2,..., $2^n$-2, respectively. In most instances, therefore, the $2^n$-1 m-sequences of length $2^n$-1 may be made equivalent to each other by a suitable cyclic bit shift. In this regard, the set of $2^n$-1 m-sequences of length$2^n$ -1, which corresponds to various cyclic shifts or phases of a single m-sequence, may be transformed to a Walsh-Hadamard matrix of size $2^n \times 2^n$, such that a fast Walsh-Hadamard matrix transform may be applied to reduce computational complexity for SSS processing at the receiver. Various ways may be utilized to generate the set of $2^n$-1 desired m-sequences of length $2^n$-1, and these ways may vary based on, for example, an initial setting of the generator polynomial and a specific form of $a_n,a_{n-1},...,a_1 \in [0,1]$. In this regard, the set of $2^n$-1 desired m-sequences of length $2^n$-1 may be generated in a determined order with the initial setting of $[SR_1, SR_2 ,..., SR_n]= [1,0,...,0]$.

In accordance with an embodiment of the invention, the first desirable m-sequence of length $2^n$-1 in the set may be generated by initializing the contents of n shift register stages or cells of corresponding m-sequence generator with $[SR_1, SR_2,..., SR_n]=[1,0,...,0]$. The second desirable m-sequence of length $2^n$-1 in the set may be obtained by one-bit left cyclic shift of the first desirable m-sequence of length $2^n$-1. The third desirable m-sequence of length $2^n$-1 in the set may be generated by one-bit left cyclic shift of the second desirable m-sequence of length $2^n$-1, and so on. The process may continue in a way that further desired m-sequences of length $2^n$-1 in the set may be generated from successive one-bit left cyclic shifts of the first desirable m-sequence of length $2^n$-1. For example, the $k^{th}$ m-sequence, where $1 < k \le 2^n$-1, in the set of the desired m-sequences of length $2^n$-1 may be generated by $k$ successive one-bit left cyclic shifts of the first desirable m-sequence of length 2" -1.

The m-sequence generator 300 may represent a realization of a generator polynomial of $g(X)=X^5+X^2+1$, where $n = 5$ and $[a_5,a_4,..., a_0]=[1,0,0,1,0,1]$. The generator polynomial of $g(X)=X^5+X^2+1$ may be used for generating the SSS sequences defined in 3GPP EUTRA (LTE). The m-sequence generator 300 may comprise, for example, 5 exemplary shift registers stages or cells, indicated by SR1 301a, SR2 301b, SR3 301c, SR4 301d, and SR5 301e, respectively. These 5 exemplary shift registers may be operable to generate a complete set of $2^5$-1 m-sequences of length $2^5$-1 by way of linear feedback shift registers (LFSR) via the Ex-OR 320. The Ex-OR 320 may comprise suitable logic, circuitry and/or code that may enable performing XOR operation over inputs from, for example, SR3 301b and SR5 301 e, respectively. The Ex-OR 320 may provide a feedback to the m-sequence generator 300, for example, to the SR1 301 a. The m-sequence generator 300 may produce the complete set of $2^5$-1 different but cyclically identical m-sequences of length $2^5$-1. In this regard, the m-sequence generator 300 may be enabled to generate $2^5$-1 desired m-sequences of length $2^5$-1, which may form a 32x32 Walsh-Hadamard matrix after pre-pending a zero to every sequence, in a determined order.

In accordance with an embodiment of the invention, the first desired m-sequence of length $2^5$-1 may be generated by setting the contents of the 5 shift registers of the m-sequence generator 300 as $[SR_1,SR_2,...,SR_5]=[1,0,...,0]$. The generated first desired m-sequence of length $2^5$-1 is:

[0000100101100111110001101110101].

By one-bit left cyclic shift of the first desired m-sequence of length $2^5$-1, the second desired m-sequence of length $2^5$-1 may be generated as:

[0001001011001111100011011101010].

By one-bit left cyclic shift of the second desired m-sequence of length $2^5$-1, the third desired m-sequence of length $2^5$-1 may be generated as:

[0010010110011111000110111010100].

The process may go on until the complete set of desired m-sequences of length $2^5$-1 may be generated as presented in Table 1. Table 1 may provide a size of 32x32 Walsh-Hadamard matrix by, for example, pre-pending to each sequence a 0 and re-ordering the sequence elements, which may enable various algorithms such as a fast Walsh-Hadamard matrix transform for SSS sequence detection.

Table 1 Set of desired m-sequences for g(X) = $X^5 + X^2 + 1$

| Seq # | Sequence |
|---|---|
| 0 | 0000100101100111110001101110101 |
| 1 | 0001001011001111100011011101010 |
| 2 | 0010010110011111000110111010100 |
| 3 | 0100101100111110001101110101000 |
| 4 | 1001011001111000110111010100000 |
| 5 | 0010110011110001101110101000001 |
| 6 | 0101100111100011011101010000010 |
| 7 | 1011001111000110111010100000100 |
| 8 | 0110011110001101110101000001001 |
| 9 | 1100111100011011101010000100010 |
| 10 | 1001111000110111010100001001010 |
| 11 | 0011110001101110101000010010110 |
| 12 | 0111100011011101010000100101100 |
| 13 | 1111000110111010100001001011000 |
| 14 | 1110001101110101000010010110011 |
| 15 | 1100011011101010000100101100110 |
| 16 | 1000110111010100001001011001110 |
| 17 | 1000110111010100001001011001111 |
| 18 | 0001101110101000010010110011111 |
| 19 | 0011011101010000100101100111110 |
| 20 | 0110111010100001001011001111100 |
| 21 | 1101110101000010010110011111000 |
| 22 | 1011101010000100101100111110001 |
| 23 | 0111010100001001011001111100011 |
| 24 | 1110101000010010110011111000110 |
| 25 | 1101010000100101100111110001101 |
| 26 | 1010100001001011001111100011011 |
| 27 | 0101000010010110011111000110111 |
| 28 | 1010000100101100111110001101110 |
| 29 | 0100001001011001111100011011101 |
| 30 | 1000010010110011111000110111010 |

As illustrated in Table 1, the $2^5$-1 m-sequences of length $2^5$-1 may each be a cyclically left shifted version of the first m-sequence of length $2^5$-1. In accordance with various embodiments of the invention, the set of desired m-sequences of length $2^5$-1 presented in Table 1 may be generated in a determined order by successive cyclical left shifting of the first desired m-sequence of length $2^5$-1 from the initialization setting of $[SR_1, SR_2,...,SR_5] = [1,0,...,0]$ for the m-sequence generator 300. After pre-pending to each sequence a zero and re-ordering, the generated set of $2^5$-1 m-sequences of length $2^5$-1 may form a 32x32 Walsh-Hadamard matrix that may permit the use of the fast Walsh-Hadamard transform at the UE 130 to achieve a lower computational complexity in correlation operations for SSS detection.

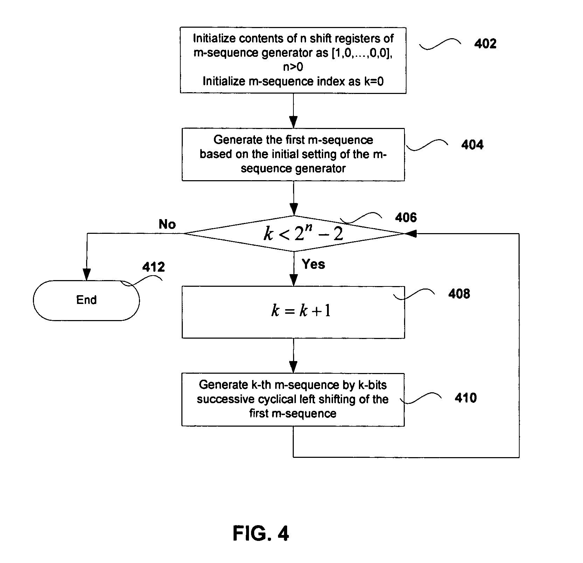

FIG. 4 is a flow chart illustrating exemplary steps for generating m-sequences, in accordance with an embodiment of the invention. Referring to FIG. 5, the exemplary steps begin with step 402, where the $n$ ($n > 0$) shift register stages or cells (SR) such as SR1 301a - SR5 301e of an m-sequence generator such as the m-sequence generator 300 may be initialized by setting the contents of the n shift register stages or cells as $[SR_1, SR_2,...,SR_n] = [1,0,...,0]$. $k$ may be a parameter that may be utilized for indexing a set of $2^n$-1 m-sequences of length $2^n$-1 and may be initialized to a value of $\kappa=0$.

In step 404, the first m-sequence of length $2^n$-1 in the set may be generated from the initial setting of $[SR_1, SR_2,...,SR_n]=[1.0,...,0]$. In step 406, the m-sequence index k may be compared with $2^n$-1 to determine whether the complete set of $2^n$-1 m-sequences of length $2^n$-1 has been generated. In instances where k may be less than $2^n$-1, then in step 408, the m-sequence index $k$ may be incremented by 1. In step 410, the $k^{th}$ m-sequence may be generated by $k$ bits successive cyclical left shifting of the first m-sequence. Alternatively, the $k^{th}$ m-sequence may be generated by 1-bit cyclical left shifting of the $(k-1)^{th}$ m-sequence. The process may return to the step 406. In step 406, in instances where $k$ may be equal to or greater than $2^n$-1, this may indicate that the complete set of $2^n$-1 m-sequences of length $2^n$-1 have been generated. The process may be ended in step 412.

Aspects of a method and system for ordering sequences for synchronization signaling in a wireless system are provided. In accordance with various embodiments of the invention, the UE 130 may receive signals from a base station such as the e-NodeB 1 110a. The received signals may be transmitted in a format, which may comprise synchronization signals PSS 210a and SSS 210b, respectively. Synchronization sequences may be carried by the PSS 210 and the SSS 210b for downlink signal synchronization at the UE 130. For example, a PSS sequence may be used for slot synchronization and physical layer cell ID identification within a cell ID group, while an SSS sequence may be used for frame synchronization and in conjunction with PSS, cell ID group detection. The UE 130 may determine the PSS sequence and the SSS sequence by correlating the received signals with possible candidates for PSS sequences and SSS sequences.

An SSS sequence may be constructed by concatenating and interleaving two m-sequences from an ordered set of m-sequences provided by the m-sequence generator 300. The UE 130 may take an m-sequence transform approach to determine which sequence from the ordered set of m-sequences may be received. The first m-sequence of the ordered set may be obtained by setting initial contents of shift register $[SR_1, SR_2,...,SR_n]=[1,0,...,0]$ in the m-sequence generator 300. The subsequent m-sequences of the particular set of m-sequences may be generated by successive cyclical left shifting of the generated first m-sequence. The ordered set of m-sequences generated may form a Walsh-Hadamard matrix such like, for example, after pre-pending a 0 to each sequence and re-ordering the resulted sequences as presented in Table 1, a fast Walsh-Hadamard matrix transform may be used for SSS sequence detection.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a method and system for ordering sequences for synchronization signaling in a wireless system.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1. A method for processing signals, the method comprising:

   receiving, at a user equipment (UE), a signal comprising a synchronization sequence from a base station; and

determining said synchronization sequence based on an ordered set of maximal length sequences (m-sequences) at said UE.

2. The method according to claim 1, wherein said synchronization sequence is constructed from one or more maximal length sequence (m-sequence).

3. The method according to claim 1, wherein said base station is a eUTRAN base station.

4. The method according to claim 1, comprising calculating correlations between said received signal and said ordered set of maximal length sequences.

5. The method according to claim 4, comprising determining said synchronization sequence based on said calculated correlations.

6. The method according to claim 1, wherein said ordered set of maximal length sequences is transformed from a single maximal length sequence (m-sequence) in a determined order.

7. The method according to claim 6, comprising generating a first m-sequence of said ordered set of maximal length sequences from an initial setting of $[SR_1, SR_2 \, SR_n = [1,0,...,0]$ of an n-stage m-sequence generator, where $2^n$-1 equals to the length of said received synchronization sequence, where n is an non-zero integer.

8. A system for signal processing, the system comprising:

one or more circuits operable to receive, at a user equipment (UE), a signal comprising a synchronization sequence from a base station; and
said one or more circuits operable to determine said synchronization sequence based on an ordered set of maximal length sequences (m-sequences) at said UE.

9. The system according to claim 8, wherein said synchronization sequence is constructed from one or more maximal length sequence.

10. The system according to claim 8, wherein said base station is a eUTRAN base station.

FIG. 1

EP 2 063 554 A2

200

Downlink Radio Frame (10ms)

| 1 | 2 | 3 | 4 | 5 | 6 | 7 | 8 | 9 | 10 |

1 ms (sub-frame)

210

SSS  PSS

| 1 | 2 | 3 | 4 | 5 | | | 1 | 2 | 3 | 4 | 5 | 6 | 7 |

210a  210b

0.5 ms (Slot)

FIG. 2

10

**M-sequence generator**

300

310

Ex-OR

| SR1 | SR2 | SR3 | SR4 | SR5 |

Output

301a  301b  301c  301d  301e

**FIG. 3**

Initialize contents of n shift registers of m-sequence generator as [1,0,...,0,0], n>0
Initialize m-sequence index as k=0 — 402

Generate the first m-sequence based on the initial setting of the m-sequence generator — 404

406 — $k < 2^n - 2$

No → End — 412

Yes

$k = k + 1$ — 408

Generate k-th m-sequence by k-bits successive cyclical left shifting of the first m-sequence — 410

**FIG. 4**

**EP 2 063 554 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60990218 B
- US 61095454 B